(19) Europäisches Patentamt
European Patent Office
Office européen des brevets

(11) **EP 4 710 773 A1**

(12) **EUROPEAN PATENT APPLICATION**
published in accordance with Art. 153(4) EPC

(43) Date of publication:
**18.03.2026 Bulletin 2026/12**

(21) Application number: **24851584.3**

(22) Date of filing: **23.07.2024**

(51) International Patent Classification (IPC):
*A23L 2/56* $^{(2006.01)}$    *A23L 2/00* $^{(2006.01)}$
*A23L 2/38* $^{(2021.01)}$    *C12C 12/04* $^{(2006.01)}$
*C12G 3/06* $^{(2006.01)}$

(52) Cooperative Patent Classification (CPC):
**A23L 2/00; A23L 2/38; A23L 2/56; C12C 12/04;
C12G 3/06**

(86) International application number:
**PCT/JP2024/026239**

(87) International publication number:
**WO 2025/033155 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.08.2023 JP 2023128763**

(71) Applicant: **Asahi Group Holdings, Ltd.
Tokyo 130-8602 (JP)**

(72) Inventor: **NAKAYAMA, Wataru
Moriya-shi, Ibaraki 302-0106 (JP)**

(74) Representative: **Müller-Boré & Partner
Patentanwälte PartG mbB
Friedenheimer Brücke 21
80639 München (DE)**

(54) **LOW-ALCOHOL BEER-TASTE BEVERAGE AND PRODUCTION METHOD FOR SAME**

(57) Problem to be solved by the present invention is to provide a low-alcohol beer-taste beverage that has suppressed scorched smell and green soybean smell and has excellent fermentation feeling and beer-like robust feeling. The means for solving the problem is a low-alcohol beer-taste beverage having an alcohol concentration of less than 1 v/v%, comprising: a 2-acetyltetrahydropyridine compound concentration of more than 1 ppb and 30 ppb or less, the 2-acetyltetrahydropyridine compound being at least one selected from the group consisting of 2-acetyl-3,4,5,6-tetrahydropyridine and 2-acetyl-1,4,5,6-tetrahydropyridine that is a tautomer of 2-acetyl-3,4,5,6-tetrahydropyridine; and a propyl acetate concentration of 0.2 to 50 ppm.

EP 4 710 773 A1

**Description**

TECHNICAL FIELD

The present invention relates to a low-alcohol beer-taste beverage having an alcohol concentration of less than 1 v/v%.

BACKGROUND ART

Low-alcohol beer-taste beverages obtained by performing dealcoholization to fermented beer to remove alcohol have been known. A beer-taste beverage subjected to dealcoholization after fermentation, from which the sweetness of alcohol itself may be removed due to alcohol removal, or the aroma peculiar to beer may be removed, has a plain flavor, and generally has reduced palatability.

Patent Document 1 describes a flavor-improving agent for beer-like beverage containing at least one 2-acetyltetrahydropyridine compound selected from the group consisting of 2-acetyl-3,4,5,6-tetrahydropyridine and 2-acetyl-1,4,5,6-tetrahydropyridine that is a tautomer thereof. When the flavor-improving agent for beer-like beverage of Patent Document 1 is added, cereal aroma serving as the retronasal aroma of beer-like beverage is enhanced, and as a result, rich feeling is enhanced, sourness is reduced, and flavor balance is improved.

Patent Document 2 describes that when a 2-acetyltetrahydropyridine compound and a sweetener are contained in a non-fermented beer-taste beverage, obtained is a non-fermented beer-taste beverage having sufficient body feeling and suppressed sweetness remaining after drinking.

PRIOR ART DOCUMENTS

PATENT DOCUMENTS

    Patent Document 1: JP-A-2021-027828
    Patent Document 2: WO-A1-2022/050067

SUMMARY OF THE INVENTION

PROBLEMS TO BE SOLVED BY THE INVENTION

The low-alcohol beer-taste beverage has weak body feeling because the stimulus, sweetness, and astringent taste of alcohol are not felt at the time of drinking. As a means for enhancing the body feeling of a beer-taste beverage, including a 2-acetyltetrahydropyridine compound has been known as described above.

However, it became clear that there is a problem that when a 2-acetyltetrahydropyridine compound is included in a low-alcohol beer-taste beverage, scorched smell as the top note and green soybean smell as the middle last note or later are generated, and fermentation feeling due to glorious fermentation aroma and beer-like robust feeling due to a swelling aftertaste are impaired.

The present invention has been made to solve the above problems, and an object of the present invention is to provide a low-alcohol beer-taste beverage that has suppressed scorched smell and green soybean smell and has excellent fermentation feeling and beer-like robust feeling.

SOLUTIONS TO THE PROBLEMS

The present invention includes the following embodiments.

[Embodiment 1] A low-alcohol beer-taste beverage having an alcohol concentration of less than 1 v/v%, preferably 0.5 v/v% or less, more preferably 0.1 v/v% or less, still more preferably 0.04 v/v% or less, particularly preferably 0.02 v/v% or less, and most preferably 0.01 v/v% or less, including: a 2-acetyltetrahydropyridine compound concentration of more than 1 ppb and 30.0 ppb or less, preferably 2 to 20 ppb, and more preferably 3 to 15 ppb, the 2-acetyltetrahydropyridine compound being at least one selected from the group consisting of 2-acetyl-3,4,5,6-tetrahydropyridine and 2-acetyl-1,4,5,6-tetrahydropyridine that is a tautomer of 2-acetyl-3,4,5,6-tetrahydropyridine; and a propyl acetate concentration of 0.2 to 50 ppm, preferably 1 to 40 ppm, and more preferably 10 to 30 ppm.

[Embodiment 2] The low-alcohol beer beer-taste beverage according to Embodiment 1, wherein the alcohol concentration is less than 0.04 v/v%.

[Embodiment 3] The beer-taste beverage according to Embodiment 1 or 2, having a malt ratio of 80 w/w% or less, and preferably 50 to 80 w/w%.

[Embodiment 4] The low-alcohol beer-taste beverage according to any one of Embodiments 1 to 3, including a dealcoholized wort fermentation liquid.

[Embodiment 5] The low-alcohol beer-taste beverage according to any one of Embodiments 1 to 4, having an apparent extract concentration of 0.3 to 10%.

[Embodiment 6] The low-alcohol beer-taste beverage according to any one of Embodiments 1 to 4, having an apparent extract concentration of 1 to 10%, preferably 2 to 9%, more preferably 4 to 9%, and still more preferably 5 to 9%.

[Embodiment 7] The low-alcohol beer-taste beverage according to Embodiment 1 or 2, having an apparent extract concentration of 0.3 to 5%, preferably 0.5 to 3%, and more preferably 0.6 to 1.7%.

[Embodiment 8] A production method for a low-alcohol beer-taste beverage having an alcohol concentration of less than 1 v/v%, preferably 0.5 v/v% or less, more preferably 0.1 v/v% or less, still more preferably 0.04 v/v% or less, particularly preferably 0.02 v/v% or less, and most preferably 0.01 v/v% or less, the production method including:

providing a low-alcohol beer-taste beverage intermediate liquid having an alcohol concentration of less than 1 v/v%, preferably 0.5 v/v% or less, more preferably 0.1 v/v% or less, still more preferably 0.04 v/v% or less, particularly preferably 0.02 v/v% or less, and most preferably 0.01 v/v% or less; and

including: an ATHP in a concentration of more than 1 ppb and 30 ppb or less, preferably 2 to 20 ppb, and more preferably 3 to 15 ppb; and propyl acetate in a concentration of 0.2 to 50 ppm, preferably 1 to 40 ppm, and more preferably 10 to 30 ppm into the low-alcohol beer-taste beverage intermediate liquid.

[Embodiment 9] The low-alcohol beer-taste beverage according to Embodiment 1, 2, 5, or 7, being a non-fermented low-alcohol beer-taste beverage.

EFFECTS OF THE INVENTION

According to the present invention, provided is a low-alcohol beer-taste beverage that has suppressed scorched smell and green soybean smell and has excellent fermentation feeling and beer-like robust feeling.

DETAILED DESCRIPTION

In the specification, the term "step" includes not only an independent step but also a step that cannot be clearly distinguished from other steps as long as the intended purpose of the step is achieved. In addition, when a plurality of substances corresponding to each component are present in a composition, the content of each component in the composition means the total amount of the plurality of substances present in the composition unless otherwise specified. Furthermore, for the upper limits and the lower limits of numerical ranges in the specification, the values can be arbitrarily selected and combined. Hereinafter, embodiments of the present invention will be described in detail. However, the following embodiments exemplify low-alcohol beer-taste beverages and production methods thereof for embodying the technical idea of the present invention, and the present invention is not limited to the low-alcohol beer-taste beverages and production methods thereof as follows.

<Low-Alcohol Beer-Taste Beverage>

The "low-alcohol beer-taste beverage" refers to a beer-taste beverage having a lower alcohol concentration than a normal beer-taste beverage. The "beer-taste" refers to a taste and aroma evoking beer. The "beer" refers to a beverage obtained by using malt, hop, water, and the like as raw materials, and fermenting them with yeast.

In the specification, the meaning of the "low-alcohol beer-taste beverage" also includes a non-alcohol beer-taste beverage containing substantially no alcohol. The term "alcohol" means ethanol.

The low-alcohol beer-taste beverage of the present invention may be a fermented low-alcohol beer-taste beverage, or may be a non-fermented low-alcohol beer-taste beverage. The fermented low-alcohol beer-taste beverage is, for example, a low-alcohol beer-taste beverage that contains a low-alcohol liquid obtained by dealcoholization of fermented beer, or uses the liquid as its base liquid.

The non-fermented low-alcohol beer-taste beverage is, for example, a beverage finished with beer-like flavor and taste obtained by including a beer fragrance or a hop fragrance, each of which contains aroma components of beer and the like, into a base beverage liquid. The base beverage liquid of the non-fermented low-alcohol beer-taste beverage may contain alcohol in lower concentration than a usual beer, or may contain absolutely no alcohol. When the beverage liquid contains absolutely no alcohol, the non-fermented non-alcohol beer-taste beverage can be obtained.

The production method for a low-alcohol beer-taste beverage of the present invention includes: including a 2-acetyltetrahydropyridine compound into a low-alcohol beer-taste beverage; and including propyl acetate into a low-alcohol beer-taste beverage. Other than these steps, a conventional production method for a low-alcohol beer-taste beverage can be used.

<2-Acetyltetrahydropyridine Compound (ATHP)>

The 2-acetyltetrahydropyridine compounds contained in the low-alcohol beer-taste beverage of the present invention, that is, 2-acetyl-3,4,5,6-tetrahydropyridine and 2-acetyl-1,4,5,6-tetrahydropyridine, are aroma components. Therefore, the use thereof does not significantly change the taste property of the low-alcohol beer-taste beverage. In addition, the 2-acetyltetrahydropyridine compound has a relatively high boiling point of 200 to 250°C, and does not volatilize and keeps its concentration in the process of dealcoholizing a wort fermentation liquid.

2-Acetyl-3,4,5,6-tetrahydropyridine and 2-acetyl-1,4,5,6-tetrahydropyridine are tautomers therebetween. Thus, when 2-acetyl-3,4,5,6-tetrahydropyridine is added into a low-alcohol beer-taste beverage, the low-alcohol beer-taste beverage generally contains both 2-acetyl-3,4,5,6-tetrahydropyridine and 2-acetyl-1,4,5,6-tetrahydropyridine. The abundance ratio thereof is determined depending on the surrounding pH environment or the like.

In the specification, the 2-acetyltetrahydropyridine compound may be described as "ATHP". ATHP is a compound produced when malt is heated in the process of producing a wort fermentation liquid. ATHP may be produced by adjusting the production conditions of the wort fermentation liquid, or a commercially available fragrance may be used.

When ATHP is included into a low-alcohol beer-taste beverage containing a dealcoholized wort fermentation liquid, the low-alcohol beer-taste beverage has improved body feeling or the like. ATHP can be included in a low-alcohol beer-taste beverage, for example by mixing a dealcoholized wort fermentation liquid containing ATHP, or by adding ATHP alone or a fragrance containing ATHP.

ATHP is included in the low-alcohol beer-taste beverage in such an amount that the ATHP concentration of the low-alcohol beer-taste beverage is more than 1 ppb and 30 ppb or less. When the ATHP concentration of the low-alcohol beer-taste beverage is 1 ppb or less, the body feeling becomes weak; and when the ATHP concentration is more than 30 ppb, the cereal aroma becomes strong, and the flavor balance may deteriorate. The ATHP concentration of the low-alcohol beer-taste beverage is preferably 2 to 20 ppb, and more preferably 3 to 15 ppb.

<Propyl Acetate>

The low-alcohol beer-taste beverage contains propyl acetate ($CH_3COOC_3H_8$). Propyl acetate is a substance exhibiting pear-like aroma.

In an embodiment, propyl acetate is included in the low-alcohol beer-taste beverage in such an amount that the propyl acetate concentration of the low-alcohol beer-taste beverage is 0.2 to 50 ppm. When the propyl acetate concentration of the low-alcohol beer-taste beverage is 1 ppm or less, scorched smell and green soybean smell are not sufficiently suppressed, and fermentation feeling and beer-like robust feeling are reduced; and when the propyl acetate concentration is more than 50 ppm, excessive fruit feeling is exhibited, and beer-like flavor may be impaired. The propyl acetate concentration of the low-alcohol beer-taste beverage is preferably 1 to 40 ppm, and more preferably 10 to 30 ppm.

<Beer-Taste Beverage Subjected to Dealcoholization after Fermentation>

One embodiment of the low-alcohol beer-taste beverage of the present invention is a beer-taste beverage subjected to dealcoholization after fermentation. The beer-taste beverage subjected to dealcoholization after fermentation is a beer-taste beverage containing a dealcoholized wort fermentation liquid or a component derived therefrom. The dealcoholized wort fermentation liquid is a liquid obtained by removing alcohol from a fermentation liquid obtained by fermenting wort with beer yeast, that is, a wort fermentation liquid. In the present invention, the wort means wort used in production of usual beer, and the wort contains a component derived from malt and, if necessary, a component derived from hop. The component derived from malt refers to a component contained in malt. The component derived from hop refers to a component contained in hop such as iso a acid. The component derived from the dealcoholized wort fermentation liquid refers to a component contained in the dealcoholized wort fermentation liquid.

The wort fermentation liquid can be produced, for example, by the following method. First, crushed malt, auxiliary raw materials such as barley, and hot water are added to a preparation tank, and mixed to prepare a Maische. The Maische can be prepared by a conventional method. For example, the Maische is first held at 35 to 60°C for 20 to 90 minutes to decompose proteins derived from the raw materials into amino acids or the like, and the process proceeds to the saccharification step. At this time, in addition to the main raw materials and the auxiliary raw materials, enzymes such as transglucosidase, flavor components such as spices and herbs, and the like are added as necessary.

Thereafter, the Maische is gradually heated and held at a predetermined temperature for a certain period of time, so that the starchy material is saccharified by using an enzyme derived from malt or an enzyme added to the Maische. The temperature and time for the saccharification process can be appropriately determined in consideration of the type of enzyme to be used, the amount of the Maische, the intended quality of the wort fermentation liquid, and the like, and the saccharification process can be performed, for example, by holding the Maische at 60 to 72°C for 30 to 90 minutes. After the saccharification process, the Maische is held at 76 to 78°C for about 10 minutes, and then filtered in a wort filtration tank to obtain a transparent saccharide solution. When the saccharification process is performed, an enzyme may be added in an appropriate amount within a necessary range.

The raw materials to be subjected to saccharification, that is, the starchy raw materials include malt. The content of malt in the raw materials to be subjected to saccharification is 25 w/w% or more, preferably 40 w/w% or more, and more preferably 50 w/w% or more, from the viewpoint of not reducing beer-like robust feeling. The raw materials to be subjected to saccharification may have a malt ratio of 100 w/w%. The malt ratio is the ratio of the weight of malt to the weight of the starchy raw materials. The higher the malt ratio, the more easily gunpowder smell, chemical smell, and sticky feeling after drinking associated with the reduction in alcohol concentration occur. From the viewpoint of suppressing scorched smell and green soybean smell, the malt ratio is preferably 80 w/w% or less, and more preferably 50 to 80 w/w%.

The auxiliary raw material means a raw material other than malt and hop. Examples of the auxiliary raw material include starchy raw materials such as barley, wheat, corn starch, corn grits, rice, and kaoliang, and carbohydrate raw materials such as liquid sugar and sugar. Here, the liquid sugar is produced by decomposing and saccharifying a starchy material with an acid or a saccharifying enzyme, and mainly contains glucose, maltose, maltotriose, and the like. In addition, spices, herbs, fruits, and the like used for the purpose of imparting or improving flavor are also included in the auxiliary raw material.

The saccharifying enzyme means an enzyme that decomposes a starchy material to produce sugars. Examples of the saccharifying enzyme include $\alpha$-amylase, glucoamylase, and pullulanase.

The operation for boiling the wort may be performed according to methods and conditions that are usually performed when beer is produced. For example, the saccharide solution whose pH has been adjusted is transferred to a boiling pot and boiled. Hop is added between the start of boiling the saccharide solution and standing in a whirlpool. As the hop, a hop extract or a component extracted from hop may be used. The saccharide solution is then transferred to a precipitation tank called a whirlpool, cleared of hop cake generated by boiling, coagulated proteins, and the like, and then cooled to an appropriate temperature with a plate cooler.

From the viewpoint of not reducing the beer-like robust feeling, the wort is adjusted for water content so as to have a wort extract concentration of 10 to 18%. On the other hand, when the wort extract concentration is within the above range, gunpowder smell, chemical smell, and sticky feeling after drinking associated with the reduction in alcohol concentration may occur. The wort extract concentration of the wort is preferably 11 to 17%, more preferably 11.5 to 16.5%, and still more preferably 12 to 15.5%.

The wort is obtained by the operation up to the boiling of the wort. The obtained wort is fermented with yeast to obtain a wort fermentation liquid. The wort may be fermented by a conventional method. For example, the cooled wort can be inoculated with beer yeast, transferred to a fermentation tank, and subjected to alcohol fermentation.

The apparent final fermentation degree of the wort fermentation liquid is, from the viewpoint of not reducing the beer-like robust feeling, adjusted to 90% or less, preferably 35 to 90%, and more preferably 40 to 60%. On the other hand, when the apparent final fermentation degree is within the above range, gunpowder smell, chemical smell, and sticky feeling after drinking associated with the reduction in alcohol concentration may occur.

The fermentation degree is an important index indicating how much fermentation has progressed in the fermented beer, and how fermentation has progressed. Further, the final fermentation degree means the ratio of the extract that can be utilized by beer yeast based on the raw wort extract. Here, the extract that can be utilized by beer yeast is obtained by subtracting the extract contained in the product beer (that is, the extract remaining after the entire extract that can be utilized by beer yeast is fermented (final extract)) from the raw wort extract. The apparent final fermentation degree is a final fermentation degree calculated by using, as the value of the final extract, the extract concentration (%) determined from the specific gravity of the apparent extract, that is, the beer containing alcohol.

The "extract" refers to the evaporation residual solid content of wort. The extract is mainly made of sugar. The content of the extract can be adjusted by changing the charged amounts of malt, various starches, and saccharides as raw materials. The true extract concentration of a beer-like fermented malt beverage can be measured by, for example, the EBC method (Methods of Analysis of BCOJ, 7.2 (2004), edited by Brewers Association of Japan). The term extract means the nonvolatile solids as such, the amount of the nonvolatile solids, or the concentration (%) of the nonvolatile solids, depending on the context.

The apparent final fermentation degree Vend of the wort fermentation liquid can be determined, for example, from the following formula (1).

$$\text{Vend (\%)} = \{(P-\text{Eend})/P\} \times 100 \quad (1)$$

In the formula, P is a raw wort extract, and Eend is an apparent final extract.

The raw wort extract P is a theoretical wort extract value before alcoholic fermentation inversely calculated from the alcohol concentration and the extract value of the product beer in accordance with the Balling equation. Specifically, the raw wort extract P can be obtained by the method shown in Analytica-EBC (9.4) (2007). The apparent final extract Eend can be obtained by: collecting beer in a flask; adding a large amount of fresh compressed yeast; fermenting the beer at 25°C while stirring the beer until the extract value no longer decreases (24 hours); and measuring the value of the apparent extract in the remaining beer.

The apparent final extract Eend may be a negative value because it is calculated from the specific gravity of the final extract with alcohol. As a result, the apparent final fermentation degree may exceed 100%.

The apparent final fermentation degree of the wort fermentation liquid can be controlled by, for example, adjusting the saccharification conditions such as the presence or absence of use of an enzyme when raw materials are saccharified and the type and blending amount of the raw materials. For example, when the saccharification time for raw materials is lengthened, the sugar concentration that can be used by yeast can be increased, and the apparent final fermentation degree of the wort fermentation liquid can be increased.

Examples of the method for removing alcohol from the wort fermentation liquid include: a method in which the wort fermentation liquid is heated or heated under reduced pressure to vaporize alcohol; and a method in which alcohol is removed with a reverse osmosis membrane or the like. The dealcoholized wort fermentation liquid has its alcohol removed to such an extent that the alcohol content of the low-alcohol beer-taste beverage in the final product reaches a desired concentration.

The low-alcohol beer-taste beverage of the present invention has, for example, an alcohol concentration of less than 1 v/v%, preferably 0.5 v/v% or less, more preferably 0.1 v/v% or less, further preferably 0.04 v/v% or less, particularly preferably 0.02 v/v% or less, and most preferably 0.01 v/v% or less. The low-alcohol beer-taste beverage of the present invention may be a non-alcohol beer-taste beverage containing substantially no alcohol. Specific examples of such a low-alcohol beer-taste beverage include a non-alcohol beer-taste beverage having an alcohol concentration of 0.00 v/v%.

When the low-alcohol beer-taste beverage contains a dealcoholized wort fermentation liquid or a component derived from the same, the low-alcohol beer-taste beverage is provided with fermentation feeling, complex taste, beer-like flavor, and the like.

On the other hand, the dealcoholized wort fermentation liquid has its alcohol and volatile aroma components removed. Therefore, the fermentation feeling and beer-like robust feeling thereof felt at the time of drinking are weaker than those of the wort fermentation liquid.

The amount and concentration of the dealcoholized wort fermentation liquid or the component derived from the same contained in the low-alcohol beer-taste beverage are not particularly limited, and can be appropriately set according to a desired flavor.

The wort fermentation liquid may be a wort top fermentation liquid, or may be a wort bottom fermentation liquid, and is preferably a wort bottom fermentation liquid from the viewpoint of refreshing the aftertaste. The wort top fermentation liquid is a wort fermentation liquid obtained by inoculating a wort with a top fermentation yeast, and fermenting the wort under normal fermentation conditions, for example, at 15 to 25°C for several days. The wort bottom fermentation liquid is a wort fermentation liquid obtained by inoculating a wort with a bottom fermentation yeast, and fermenting the wort under normal fermentation conditions, for example, at around 10°C for about 1 week.

The apparent extract concentration of the low-alcohol beer-taste beverage is adjusted to 1 to 10%. When the apparent extract concentration of the low-alcohol beer-taste beverage is less than 1%, the low-alcohol beer-taste beverage may have an insufficient robust feeling. When the apparent extract concentration of the low-alcohol beer-taste beverage is more than 10%, the low-alcohol beer-taste beverage may have excessive taste intensity feeling so that the balance is lost as a whole. The apparent extract concentration of the low-alcohol beer-taste beverage is preferably 2 to 9%, more preferably 4 to 9%, and still more preferably 5 to 9%.

The apparent extract concentration of the low-alcohol beer-taste beverage can be measured by, for example, the method described in Methods of Analysis of BCOJ (2004), edited by Brewers Association of Japan.

In the production method for the beer-taste beverage subjected to dealcoholization after fermentation, the step of including ATHP and propyl acetate can be performed, for example, by adding a fragrance containing them in any step such as the cooling step after boiling the wort, the fermenting step, or the aging step. In this case, when the step of adding the fragrance is performed in the earlier step, the concentration of the components in the fragrance may be increased or decreased, which means that the step of adding the fragrance is preferably performed after the completion of the dealcoholization step. The beer-taste beverage subjected to dealcoholization after fermentation to which ATHP and propyl acetate are included may be referred to as a low-alcohol beer-taste beverage intermediate liquid.

In addition, the production method for the beer-taste beverage subjected to dealcoholization after fermentation may include a step of adjusting the concentration of ATHP or propyl acetate, or a step of adjusting the apparent extract concentration.

The production method for the beer-taste beverage subjected to dealcoholization after fermentation may further include: a step of adding a caramel pigment or the like; a boiling step; a pH adjusting step; a filtration step; a flavor adjusting step; a step of dissolving carbon dioxide gas, and the like, using a known apparatus or the like.

The production method for the beer-taste beverage subjected to dealcoholization after fermentation may further include a step of adding a dietary fiber, a soybean peptide, carbon dioxide, an extract, a fragrance, an acidifier, a sweetener, a bitterant, a colorant, an antioxidant, a pH adjuster, various nutritional components, and the like, as necessary.

<Non-Fermented Low-Alcohol Beer-Taste Beverage>

The non-fermented low-alcohol beer-taste beverage is a beverage in which a flavor evoking beer is reproduced without fermentation in the production process. The non-fermented low-alcohol beer-taste beverage of the present invention has, for example, an alcohol concentration of less than 1 v/v%, preferably 0.5 v/v% or less, more preferably 0.1 v/v% or less, further preferably 0.04 v/v% or less, particularly preferably 0.02 v/v% or less, and most preferably 0.01 v/v% or less. The non-fermented low-alcohol beer-taste beverage of the present invention may be a non-alcohol beer-taste beverage containing substantially no alcohol. Specific examples of such a non-fermented non-alcohol beer-taste beverage include a non-alcohol beer-taste beverage having an alcohol concentration of 0.00 v/v%.

The non-fermented low-alcohol beer-taste beverage is not an alcoholic fermentation product of wort or the like. Therefore, the cereal aroma, fermentation feeling and beer-like robust feeling thereof felt at the time of drinking are weaker than those of a usual beer.

The non-fermented low-alcohol beer-taste beverage is produced, for example, by the following method. That is, a starchy raw material such as malt is saccharified to obtain a sugar solution. The sugar solution is mixed with auxiliary raw materials such as a sweetener, a fragrance, a cereal extract, a dietary fiber, a bitterant, a dye, and hop, and if necessary, alcohol to obtain a preparation liquid. The order of mixing the raw materials with the sugar solution is not particularly limited. Subsequently, carbon dioxide gas is added to the preparation liquid. Carbon dioxide gas can be added by a conventional method. For example, the preparation liquid obtained by the preparation step may be mixed with carbonic water, or carbon dioxide gas may be directly added and dissolved into the preparation liquid obtained by the preparation step.

The sugar solution is produced by adding hot water to a ground product of malt or the like as necessary and a starchy raw materials such as grain, rice, corn starch, or the like as necessary and mixing and heating the mixture, and saccharifying the starchy material preferably into maltose or the like mainly using the enzyme of malt. As the raw materials of the starchy materials and the like such as a ground product of malt, grain, rice, corn starch, and the like, those usually used in the production of conventional beer-taste beverages may be used in a usual amount.

A sugar solution of a starchy raw material containing malt may exhibit a grassy unpleasant smell. Therefore, the ratio of malt to the total amount of the solid starchy raw materials is preferably 66 w/w% or less, more preferably 50 w/w% or less, and still more preferably 25 w/w% or less, and it is particularly preferable that malt is not used as a raw material. The malt ratio is measured in accordance with the provisions of the Liquor Tax Law. When the sugar solution is prepared from a starchy raw material other than malt, it is preferable that hot water is added to the starchy raw material, and then a composition containing amylase is added thereto.

Specific examples of the non-fermented low-alcohol beer-like beverage using no malt or having a malt ratio of less than 25 w/w% include a low-carbohydrate beer-taste beverage such as a low-carbohydrate sparkling beer. For example, when a non-fermented low-carbohydrate beer-taste beverage is produced, the preparation liquid may be produced using a raw material water, instead of using a sugar solution.

When ATHP and propyl acetate are added to the non-fermented low-alcohol beer-taste beverage, the timing thereof is not limited, and ATHP and propyl acetate can be added in an appropriate step in the production method for the non-fermented beer-taste beverage. However, when the adding step is performed in the earlier step, the concentration of each component in the compound group may be increased or decreased, which means that ATHP and propyl acetate are preferably added in the later step. ATHP or propyl acetate may be added to the produced non-fermented beer-taste beverage, for example. The non-fermented beer-taste beverage to which ATHP and propyl acetate are included may be referred to as a low-alcohol beer-taste beverage intermediate liquid.

The non-fermented low-alcohol beer-taste beverage to which ATHP is included may contain ATHP derived from malt or the like. In commercially available non-fermented beer-taste beverages containing malt, the concentration of the compound group is, for example, 3.0 to 4.0 $\mu$g/L. On the other hand, in the non-fermented beer-taste beverage containing no malt, the concentration of the compound group is, for example, 0.5 $\mu$g/L or less.

In an embodiment, the non-fermented beer-taste beverage of the present invention is a non-fermented non-alcohol beer-taste beverage. The non-fermented non-alcohol beer-taste beverage preferably includes a polymeric saccharide. By including a polymeric saccharide, the resulting beverage gives a sense of being caught in the throat when drunk, and robust feeling is enhanced.

The polymeric saccharide refers to a polymeric compound in which various saccharides are polymerized by glycosidic bonds. The polymeric saccharide is preferably a non-fermentable saccharide. Examples of the polymeric saccharide include starch decomposition products such as a dextrin and an indigestible dextrin. Among them, from the viewpoint of effectiveness, the polymeric saccharide is preferably a starch decomposition product, and more preferably an indigestible dextrin.

The starch decomposition product is a generic term for a product obtained by decomposing starch to an appropriate molecular weight using an enzyme and/or an acid. Examples of the starch decomposition product include: a dextrin obtained by dispersing starch in water, adding an enzyme (for example, alpha amylase) and/or an acid (for example, hydrochloric acid or oxalic acid) thereto, and heating, gelatinizing, and hydrolyzing the mixture; and an indigestible dextrin obtained by acting an enzyme such as alpha amylase on a dextrin resulted from acid roasting of starch. As necessary, the starch decomposition product may be purified by decoloration, deionization, or the like, and used in a liquid form, or in a powder form after spray drying, drum drying, or the like. Examples thereof also include a reduced starch decomposition product obtained by hydrogenating them, which is as effective.

The amount of the polymeric saccharide contained in the non-fermented non-alcohol beer-taste beverage is 7 mg/mL or more in concentration. When the concentration of the polymeric saccharide is less than 7 mg/mL, the robust feeling of the non-fermented non-alcohol beer-taste beverage is insufficient. The concentration of the polymeric saccharide is preferably 8 to 30 mg/mL, and more preferably 9 to 15 mg/mL.

The non-fermented non-alcohol beer-taste beverage contains a sweetness substance. The sweetness substance refers to a substance that makes a human feel sweetness when contained in his/her mouth. The typical sweetness substance is a sweetener. The sweetener refers to a seasoning used for sweetening a beverage or food. When containing a sweetness substance, the obtained beverage has a good balance between sourness and sweetness, hardly gives an aftertaste such as sourness or sweetness, and has enhanced sharpness feeling after drinking.

Examples of the sweetness substance include saccharides or sugar alcohols, and high-intensity sweeteners. Examples of the saccharide include glucose, fructose, wood sugar, sorbose, galactose, isomerized sugar (a fructose glucose liquid sugar, a glucose fructose liquid sugar, high fructose liquid sugar, and the like), sucrose, maltose, lactose, isomerized lactose, palatinose, isomaltose, maltotriose, raffinose, fructo-oligosaccharide, malto-oligosaccharide, isomalto-oligosaccharide, galacto-oligosaccharide, coupling sugar, palatinose, and the like. Examples of the sugar alcohol include erythritol, sorbitol, xylitol, mannitol, maltitol, isomaltitol, lactitol, maltotriitol, isomaltotriitol, and panitol. Examples of the high-intensity sweetener include aspartame, stevia, enzyme-treated stevia, thaumatin, sucralose, and acesulfame K.

The sweetness substance is preferably a low-molecular sugar. The low-molecular sugar refers to an oligomer in which various sugars are connected by glycosidic bonds. The sweetness substance is more preferably one or more selected from the group consisting of monosaccharides, disaccharides, and trisaccharides. The sweetness substance is further preferably one or more selected from the group consisting of glucose, fructose, maltose, fructose-glucose, and glucose-fructose.

The amount of the sweetness substance contained in the non-fermented low-alcohol beer-taste beverage is appropriately adjusted to 0.008 to 100 parts by weight based on 100 parts by weight of the polymeric saccharide. When the content of the sweetness substance in the non-fermented low-alcohol beer-taste beverage is less than 0.008 parts by weight based on 100 parts by weight of the polymeric saccharide, the non-fermented low-alcohol beer-taste beverage easily gives an aftertaste such as sourness, which is not preferable. When the content of the sweetness substance is more than 100 parts by weight based on 100 parts by weight of the polymeric saccharide, sweetness easily remains as an aftertaste, which is not preferable.

The concentration of the sweetness substance contained in the non-fermented low-alcohol beer-taste beverage is 1 to 18 mg/mL, preferably 4 to 13 mg/mL, and more preferably 6 to 11 mg/mL, in terms of sucrose.

The non-fermented low-alcohol beer-taste beverage preferably contains a cereal-derived protein decomposition product. When containing a cereal-derived protein decomposition product, the non-fermented low-alcohol beer-taste beverage has more enhanced robust feeling.

The cereal-derived protein decomposition product is obtained by: using, as a plant protein raw material, a fraction containing a large amount of proteins such as separated proteins obtained from soybean, pea, corn, wheat, barley, rice, peanut, rapeseed, sunflower, and the like; and hydrolyzing the cereal protein raw material with an acid, an alkali, or an enzyme. The cereal-derived protein raw material is preferably a soybean protein decomposition product, and the hydrolysis method is preferably an enzyme method. In the enzyme method, one or two or more kinds of proteases are used, and hydrolysis is performed with temperature, pH, and time suitable therefor. The decomposition degree can be appropriately adjusted, and the 15 wt% TCA solubilization rate is suitably about 30 to 100%. In addition, when the molecular size is too large, there is a large amount of fraction that becomes insoluble as grounds in the subsequent steps or during storage, and when the molecular size is too small, it tends to cause an unnatural umami taste. Therefore, the average molecular weight of the watersoluble fraction contained in the cereal-derived protein decomposition product is suitably 550 or more and 3000 or less, and preferably 600 or more and 1500 or less.

As for the amount of the cereal-derived protein decomposition product contained in the non-fermented low-alcohol beer-taste beverage, when the amount is too small, the effect is weak, and on the contrary, when the amount is too large, it tends to cause an astringent taste, and further, it may cause a risk of microorganisms due to an increase in pH. Generally, the cereal-derived protein decomposition product is used in an amount such that the concentration thereof in the final beverage is 10 mg/ml or less, preferably 0.5 to 7 mg/mL, and more preferably 1 to 4 mg/mL.

The non-fermented low-alcohol beer-taste beverage preferably contains no wort or barley extract. The wort or barley extract contains sugars having a relatively low molecular weight or nitrogen sources in a large amount, and is strong in sweetness and umami by itself. Therefore, when the wort or barley extract is contained in the non-fermented low-alcohol beer-taste beverage, it is difficult to adjust the balance of flavor, and sweetness remains as an aftertaste, or an unpleasant odor is likely to be generated.

The non-fermented low-alcohol beer-taste beverage preferably contains hop or hop extract in order to reproduce a fresh bitter taste peculiar to beer. The hop or hop extract refers to a leaf of hop, a ground product thereof, an extract obtained by extracting these with water or boiling water, and a concentrate or a dried product of the extract. The addition amount of the hop or hop extract is such an amount that a flavor derived from the hop is given, and for example, about 0.005 to 2 wt%, and preferably 0.01 to 0.5 wt%, in terms of raw material hop (dried product) per final beverage.

In addition, in the non-fermented low-alcohol beer-taste beverage of the present invention, raw materials such as saccharides, sugar alcohols, various glycosides such as saponin, fragrances, dietary fibers, polysaccharides, acids, and yeast extracts can be used in combination as long as the purpose of the present invention is not impaired. Examples of the saccharide include: reducing saccharides such as glucose, fructose, and maltose; low saccharides such as sucrose; and various dextrins and oligosaccharides. Examples of the fragrance include a malt flavor, a hop flavor, a beer flavor, an alcohol flavor, and a caramel flavor. Examples of the acid include organic acids such as citric acid, lactic acid, and tartaric acid; and mineral acids such as hydrochloric acid and phosphoric acid.

The production method for a non-fermented low-alcohol beer-taste beverage includes steps usually performed when a non-fermented low-alcohol beer-taste beverage is produced. For example, first, a polymeric saccharide, a sweetness substance, and other components are mixed in predetermined amounts to prepare a formulation. Then, a predetermined amount of drinking water is added to the formulation to prepare a primary raw material liquid. After boiling the primary raw material liquid, a fermentative alcohol is added as necessary, and carbon dioxide is added by a carbonation step.

The apparent extract concentration of the non-fermented low-alcohol beer-taste beverage is adjusted to preferably 0.3 to 5%, more preferably 0.5 to 3%, and still more preferably 0.6 to 1.7%. When the apparent extract concentration of the non-fermented low-alcohol beer-taste beverage is adjusted to the above range, the robust feeling and the taste intensity feeling are well-balanced.

The present invention will be described more specifically with reference to the following Examples, but the present invention is not limited thereto.

Examples

<Production Example 1>

Production of low-ATHP dealcoholized wort fermentation liquid

(1) Production of wort fermentation liquid

Ground malt, water, and corn starch were charged into a preparation pot, and gelatinized at 70°C and liquefied at 100°C. The malt ratio was 55 w/w%. Next, ground malt, an enzyme, and hot water were charged into a preparation tank, protein pausing was performed at around 55°C, then the liquid was transferred from the preparation pot to the preparation tank, and saccharification was performed at a temperature in the range of 60 to 76°C. The saccharification solution was filtered through a filter tank, lauter, and then transferred to a boiling pot, where hop was added thereto, and the mixture was boiled for 60 minutes. After boiling, hot water was added to adjust the ATHP concentration. The heat trub was removed in a whirlpool tank, and then the mixture was cooled to 10°C using a plate cooler to obtain a cold wort. The extract concentration of the wort was adjusted to 12% by increasing or decreasing the water content. The wort was added with beer yeast, and fermented at around 10°C for 7 days, and then the beer yeast was removed. The fermented wort was transferred to another tank and aged for 7 days, and then cooled to around -1°C and stabilized for 14 days. Thereafter, degassed water was added to dilute the fermented wort, and the fermented wort was filtered using diatomaceous earth to obtain a wort fermentation liquid. The obtained wort fermentation liquid was used as the fermentation liquid 1.

(2) Analysis of wort fermentation liquid

[Quantification of ATHP]

To 20 g of the fermentation liquid 1 were added 50 μL of an internal standard solution (4 μg/mL of ATHP stable isotope), 200 μL of formic acid, and 10 mL of distilled water, and the mixture was then added to OASIS MCX 500 mg/6 mL (Waters).

The column was washed with 5 mL of 1% formic acid water, and then elution was performed with 5 mL of 2% ammonia-methanol. The eluate was diluted 2 times with distilled water, and then analyzed by LC/MS/MS.

Using LC/MS/MS (5500QTRAP manufactured by AB-SCIEX), separation was performed using ACQUITY UPLC BEH C18 1.7 μm, 2.1 × 100 mm (waters) as a column. For the analysis, the mobile phase conditions were as follows: solution A: 10 mM ammonium hydrogen carbonate, solution B: acetonitrile, (B%, t): (10%, 1 min), (50%, 6 min), and ATHP transition: 126 → 84 (collision energy: 23 V). Quantification was performed using a calibration curve prepared by adding a standard. As an analysis result, the ATHP concentration of the fermentation liquid 1 was 0.5 ppb.

(3) Production of dealcoholized wort fermentation liquid

The fermentation liquid 1 was sprayed in a degassing tank under a reduced pressure of about 90 mbar to remove carbon dioxide gas, and then heated to about 50°C using a plate cooler. Thereafter, it was brought into contact with water vapor heated to around 50°C in a reduced pressure column under around 90 mbar to adsorb volatile components to the water vapor, thereby removing alcohol and volatile components. Thus, the dealcoholized wort fermentation liquid 1 having an alcohol concentration of 0.01 v/v% was prepared. Isomaltooligosaccharide was added to the obtained dealcoholized wort fermentation liquid 1 to obtain a distillation liquid 1.

The fermentation liquid 1 was sprayed in a degassing tank under a reduced pressure of about 90 mbar to remove carbon dioxide gas, and then heated to about 50°C using a plate cooler. Thereafter, it was brought into contact with water vapor heated to around 50°C in a reduced pressure column under around 90 mbar to adsorb volatile components to the water vapor, thereby removing alcohol and volatile components. Thus, the dealcoholized wort fermentation liquid 2 having an alcohol concentration of 0.001 v/v% was prepared. Isomaltooligosaccharide was added to the obtained dealcoholized wort fermentation liquid 2 to obtain a distillation liquid 2.

Propyl acetate corresponds to a volatile component that evaporates together with alcohol. Therefore, the distillation liquids 1 and 2 do not contain propyl acetate.

The apparent extract concentration of each of the distillation liquids 1 and 2 was measured and found to be 9.0 %. The "apparent extract" is a term that expresses the extract of a fermented beverage as the sucrose concentration (usually mass%) of an aqueous sucrose solution having the same specific gravity at 20°C. Since alcohol is contained therein, the apparent extract is different from the extract in the original sense (soluble evaporation residue = true extract).

<Control Example 1>

The distillation liquid 1 was mixed with a fragrance containing ATHP (San-Ei Gen F.F.I.,Inc.) so that ATHP was contained in a predetermined concentration, carbon dioxide gas was dissolved in an amount corresponding to a gas pressure of 0.23 MPa (20°C), and the temperature was adjusted to 4°C, thereby preparing a sample for drinking.

The prepared sample was subjected to sensory evaluation by six trained panelists. The evaluation items were fermented soybean smell, scorched smell, fermentation feeling, and beer-like robust feeling.

The sensory evaluation was performed by a method in which six trained beer expert panelists drank samples and scored the strength of each evaluation item in five stages. As for the score, the drink sample 1 having the least content of aroma components was scored as 3, those that gave a slightly strong feeling were scored as 4, those that gave a strong feeling were scored as 5, those that gave a slightly weak feeling were scored as 2, and those that gave a weak feeling were scored as 1. Finally, the average of the scores of six people was calculated, which was used as the score.

[Table 1]

| | | Sample 1 | Sample 2 | Sample 3 | Sample 4 | Sample 5 |
|---|---|---|---|---|---|---|
| Beverage composition | ATHP concentration (ppb) | 0.5 | 1 | 10 | 30 | 40 |
| | Propyl acetate concentration (ppm) | 0 | 0 | 0 | 0 | 0 |

# EP 4 710 773 A1

(continued)

| | | Sample 1 | Sample 2 | Sample 3 | Sample 4 | Sample 5 |
|---|---|---|---|---|---|---|
| Sensory evaluation | Green soy-bean smell | 3.00 | 4.50 | 4.67 | 5.00 | 5.00 |
| | Scorched smell | 3.00 | 4.50 | 4.67 | 4.83 | 4.83 |
| | Fermentation feeling | 3.00 | 3.00 | 3.00 | 2.83 | 2.83 |
| | Beer-like robust feeling | 3.00 | 3.00 | 3.00 | 3.50 | 3.50 |
| | Comments | Unsatisfied, watery | Cereal, flat | Cereal, light, green soybean smell | Green soybean smell, scorched smell, cereal | Green soybean smell, scorched smell, strong cereal, bad balance |

<Example 1>

The distillation liquid 1 was mixed with a fragrance containing ATHP (San-Ei Gen F.F.I.,Inc.) and propyl acetate so that ATHP and propyl acetate were contained in a predetermined concentration, carbon dioxide gas was dissolved in an amount corresponding to a gas pressure of 0.23 MPa (20°C), and the temperature was adjusted to 4°C, thereby preparing a sample for drinking. The prepared sample was subjected to sensory evaluation in the same manner as in Control Example 1.

"Comprehensive evaluation" was rated "A (excellent)" when there was no negative comment, the average value of "green soybean smell" and "scorched smell" was lower than that of the control by "0.5" points or more, and the average value of "fermentation feeling" and "beer-like robust feeling" was higher than that of the control by "0.5" points or more. "Comprehensive evaluation" was rated "B (inferior)" when the average value of "green soybean smell" and "scorched smell" was lower than that of the control by "0.5" points or more, the average value of "fermentation feeling" and "beer-like robust feeling" was higher than that of the control by "0.5" points or more, and there was a negative comment.

[Table 2]

| | | Sample 6 | Sample 7 | Sample 8 | Sample 9 | Sample 10 |
|---|---|---|---|---|---|---|
| Beverage composition | ATHP concentration (ppb) | 0.5 | 1 | 10 | 30 | 40 |
| | Propyl acetate concentration (ppm) | 0.2 | 0.2 | 0.2 | 0.2 | 0.2 |

**11**

(continued)

|  |  | Sample 6 | Sample 7 | Sample 8 | Sample 9 | Sample 10 |
|---|---|---|---|---|---|---|
| Sensory evaluation | Green soybean smell | 2.83 | 4.00 | 4.17 | 4.50 | 4.67 |
|  | Scorched smell | 2.83 | 4.00 | 4.17 | 4.33 | 4.67 |
|  | Fermentation feeling | 3.00 | 3.50 | 3.50 | 3.33 | 3.33 |
|  | Beer-like robust feeling | 3.00 | 3.50 | 3.50 | 4.00 | 4.00 |
|  | Comprehensive evaluation | - | A | A | A | B |
|  | Control of comprehensive evaluation | Sample 1 | Sample 2 | Sample 3 | Sample 4 | Sample 5 |
|  | Comments | Light | Cereal, mild | Cereal, light, flat | Green soybean, cereal, light | Green soybean smell, scorched smell, strong cereal, bad balance |

<Example 2>

A sample for drinking was prepared in the same manner as in Example 1 except that propyl acetate was mixed with the distillation liquid 1 so that the propyl acetate concentration was 1 ppm, and subjected to sensory evaluation.

[Table 3]

|  |  | Sample 11 | Sample 12 | Sample 13 | Sample 14 | Sample 15 |
|---|---|---|---|---|---|---|
| Beverage composition | ATHP concentration (ppb) | 0.5 | 1 | 10 | 30 | 40 |
|  | Propyl acetate concentration (ppm) | 1 | 1 | 1 | 1 | 1 |
| Sensory evaluation | Green soybean smell | 2.83 | 4.00 | 4.17 | 4.50 | 4.67 |
|  | Scorched smell | 2.83 | 3.83 | 4.17 | 4.33 | 4.67 |
|  | Fermentation feeling | 3.00 | 3.50 | 3.50 | 3.50 | 3.50 |
|  | Beer-like robust feeling | 3.00 | 3.50 | 3.50 | 4.17 | 4.17 |
|  | Comprehensive evaluation | - | A | A | A | B |
|  | Control of comprehensive evaluation | Sample 1 | Sample 2 | Sample 3 | Sample 4 | Sample 5 |
|  | Comments | Light | Cereal, flat | Cereal, light | Green soybean, cereal, light | Green soybean smell, scorched smell, strong cereal, bad balance |

<Example 3>

A sample for drinking was prepared in the same manner as in Example 1 except that propyl acetate was mixed with the distillation liquid 1 so that the propyl acetate concentration was 10 ppm, and subjected to sensory evaluation.

[Table 4]

| | | Sample 16 | Sample 17 | Sample 18 | Sample 19 | Sample 20 |
|---|---|---|---|---|---|---|
| Beverage composition | ATHP concentration (ppb) | 0.5 | 1 | 10 | 30 | 40 |
| | Propyl acetate concentration (ppm) | 10 | 10 | 10 | 10 | 10 |
| Sensory evaluation | Green soybean smell | 2.67 | 3.17 | 3.33 | 3.50 | 4.50 |
| | Scorched smell | 2.67 | 3.67 | 3.83 | 4.17 | 4.67 |
| | Fermentation feeling | 3.33 | 3.50 | 3.50 | 3.67 | 3.67 |
| | Beer-like robust feeling | 3.33 | 3.50 | 3.50 | 4.50 | 4.50 |
| | Comprehensive evaluation | - | A | A | A | B |
| | Control of comprehensive evaluation | Sample 1 | Sample 2 | Sample 3 | Sample 4 | Sample 5 |
| | Comments | Light, fruity | Cereal, flat, fruity | Cereal, light, fermentation feeling, beer-like robust feeling | Green soybean, cereal, light, fermentation feeling, beer-like robust feeling | Green soybean smell, scorched smell, strong cereal, bad balance |

<Example 4>

A sample for drinking was prepared in the same manner as in Example 1 except that propyl acetate was mixed with the distillation liquid 1 so that the propyl acetate concentration was 30 ppm, and subjected to sensory evaluation.

[Table 5]

| | | Sample 21 | Sample 22 | Sample 23 | Sample 24 | Sample 25 |
|---|---|---|---|---|---|---|
| Beverage composition | ATHP concentration (ppb) | 0.5 | 1 | 10 | 30 | 40 |
| | Propyl acetate concentration (ppm) | 30 | 30 | 30 | 30 | 30 |

(continued)

| | | Sample 21 | Sample 22 | Sample 23 | Sample 24 | Sample 25 |
|---|---|---|---|---|---|---|
| Sensory evaluation | Green soybean smell | 2.50 | 3.00 | 3.33 | 3.50 | 4.50 |
| | Scorched smell | 2.67 | 3.17 | 3.33 | 3.50 | 4.67 |
| | Fermentation feeling | 3.33 | 3.83 | 4.33 | 4.33 | 4.17 |
| | Beer-like robust feeling | 3.33 | 3.83 | 4.33 | 4.67 | 4.83 |
| | Comprehensive evaluation | - | A | A | A | B |
| | Control of comprehensive evaluation | Sample 1 | Sample 2 | Sample 3 | Sample 4 | Sample 5 |
| | Comments | Light, fruity | Cereal, flat, fruity, fermentation feeling | Cereal, light, fermentation feeling, beer-like robust feeling | Fruity, light, fermentation feeling, beer-like robust feeling | Fruity, strong cereal, bad balance |

<Example 5>

A sample for drinking was prepared in the same manner as in Example 1 except that propyl acetate was mixed with the distillation liquid 1 so that the propyl acetate concentration was 50 ppm, and subjected to sensory evaluation.

[Table 6]

| | | Sample 26 | Sample 27 | Sample 28 | Sample 29 | Sample 30 |
|---|---|---|---|---|---|---|
| Beverage composition | ATHP concentration (ppb) | 0.5 | 1 | 10 | 30 | 40 |
| | Propyl acetate concentration (ppm) | 50 | 50 | 50 | 50 | 50 |

(continued)

| | | Sample 26 | Sample 27 | Sample 28 | Sample 29 | Sample 30 |
|---|---|---|---|---|---|---|
| Sensory evaluation | Green soybean smell | 2.33 | 2.83 | 3.00 | 3.17 | 4.33 |
| | Scorched smell | 2.33 | 3.17 | 3.33 | 3.50 | 4.33 |
| | Fermentation feeling | 3.67 | 4.00 | 4.33 | 4.33 | 4.33 |
| | Beer-like robust feeling | 3.67 | 3.83 | 4.33 | 4.83 | 4.83 |
| | Comprehensive evaluation | - | A | A | A | B |
| | Control of comprehensive evaluation | Sample 1 | Sample 2 | Sample 3 | Sample 4 | Sample 5 |
| | Comments | Light, fruity | Cereal, flat, fruity, fermentation feeling | Cereal, light, fermentation feeling, beer-like robust feeling | Light, fermentation feeling, beer-like robust feeling | Green soybean smell, scorched smell, strong cereal, bad balance |

<Comparative Example 1>

A sample for drinking was prepared in the same manner as in Example 1 except that propyl acetate was mixed with the distillation liquid 1 so that the propyl acetate concentration was 70 ppm, and subjected to sensory evaluation.

[Table 7]

| | | Sample 31 | Sample 32 | Sample 33 | Sample 34 | Sample 35 |
|---|---|---|---|---|---|---|
| Beverage composition | ATHP concentration (ppb) | 0.5 | 1 | 10 | 30 | 40 |
| | Propyl acetate concentration (ppm) | 70 | 70 | 70 | 70 | 70 |
| Sensory evaluation | Green soybean smell | 2.17 | 2.67 | 2.83 | 3.50 | 4.00 |
| | Scorched smell | 2.17 | 3.00 | 3.67 | 4.50 | 4.00 |
| | Fermentation feeling | 3.83 | 4.17 | 4.50 | 3.83 | 3.83 |
| | Beer-like robust feeling | 3.83 | 4.17 | 4.50 | 5.00 | 5.00 |
| | Comprehensive evaluation | - | B | B | B | B |
| | Control of comprehensive evaluation | Sample 1 | Sample 2 | Sample 3 | Sample 4 | Sample 5 |
| | Comments | Too fruity, bad balance | Too fruity, bad balance | Too fruity, bad balance | Fruity, cereal, light, poor balance | Bad balance, not beer-like |

<Control Example 2>

The distillation liquid 2 was mixed with a fragrance containing ATHP (San-Ei Gen F.F.I.,Inc.) so that ATHP was contained in a predetermined concentration, carbon dioxide gas was dissolved in an amount corresponding to a gas pressure of 0.23 MPa (20°C), and the temperature was adjusted to 4°C, thereby preparing a sample for drinking.

The prepared sample was subjected to sensory evaluation by six trained panelists. The evaluation items were fermented soybean smell, scorched smell, fermentation feeling, and beer-like robust feeling.

The sensory evaluation was performed by a method in which six trained beer expert panelists drank samples and scored the strength of each evaluation item in five stages. As for the score, the drink sample 1 having the least content of aroma components was scored as 3, those that gave a slightly strong feeling were scored as 4, those that gave a strong feeling were scored as 5, those that gave a slightly weak feeling were scored as 2, and those that gave a weak feeling were scored as 1. Finally, the average of the scores of six people was calculated, which was used as the score.

[Table 8]

| | | Sample 36 | Sample 37 | Sample 38 |
|---|---|---|---|---|
| Beverage composition | ATHP concentration (ppb) | 1 | 10 | 30 |
| | Propyl acetate concentration (ppm) | 0 | 0 | 0 |
| Sensory evaluation | Green soybean smell | 4.50 | 4.67 | 5.00 |
| | Scorched smell | 4.50 | 4.67 | 4.83 |
| | Fermentation feeling | 3.00 | 3.00 | 2.83 |
| | Beer-like robust feeling | 3.00 | 3.00 | 3.50 |
| | Comments | Cereal, flat | Cereal, light, green soybean smell | Green soybean smell, scorched smell, cereal |

<Example 6>

The distillation liquid 2 was mixed with a fragrance containing ATHP (San-Ei Gen F.F.I.,Inc.) and propyl acetate so that ATHP and propyl acetate were contained in a predetermined concentration, carbon dioxide gas was dissolved in an amount corresponding to a gas pressure of 0.23 MPa (20°C), and the temperature was adjusted to 4°C, thereby preparing a sample for drinking. The prepared sample was subjected to sensory evaluation in the same manner as in Control Example 1.

"Comprehensive evaluation" was rated "A (excellent)" when there was no negative comment, the average value of "green soybean smell" and "scorched smell" was lower than that of the control by "0.5" points or more, and the average value of "fermentation feeling" and "beer-like robust feeling" was higher than that of the control by "0.5" points or more. "Comprehensive evaluation" was rated "B (inferior)" when the average value of "green soybean smell" and "scorched smell" was lower than that of the control by "0.5" points or more, the average value of "fermentation feeling" and "beer-like robust feeling" was higher than that of the control by "0.5" points or more, and there was a negative comment.

[Table 9]

| | | Sample 39 | Sample 40 | Sample 41 | Sample 42 | Sample 43 |
|---|---|---|---|---|---|---|
| Beverage composition | ATHP concentration (ppb) | 1 | 1 | 10 | 30 | 30 |
| | Propyl acetate concentration (ppm) | 0.2 | 50 | 30 | 0.2 | 50 |

(continued)

| | | Sample 39 | Sample 40 | Sample 41 | Sample 42 | Sample 43 |
|---|---|---|---|---|---|---|
| Sensory evaluation | Green soybean smell | 4.00 | 2.83 | 3.33 | 4.50 | 3.17 |
| | Scorched smell | 4.00 | 3.17 | 3.33 | 4.33 | 3.50 |
| | Fermentation feeling | 3.50 | 4.00 | 4.33 | 3.33 | 4.33 |
| | Beer-like robust feeling | 3.50 | 3.83 | 4.33 | 4.00 | 4.83 |
| | Comprehensive evaluation | A | A | A | A | A |
| | Control of comprehensive evaluation | Sample 36 | Sample 2 | Sample 3 | Sample 38 | Sample 4 |
| | Comments | Cereal, mild | Cereal, flat, fruity, fermentation feeling | Cereal, light, fermentation feeling, beer-like robust feeling | Green soybean, cereal, light | Light, fermentation feeling, beer-like robust feeling |

<Production Example 2>

Production of non-fermented non-alcohol beer-taste beverage

Hot water was added to 2.0 kg of an indigestible dextrin, 6.0 g of a sweetener, 0.5 kg of a soybean protein decomposition product, and an appropriate amount of sodium bicarbonate such that the mixture becomes 200 L, and then hop and a caramel pigment were added thereto. After boiling for 60 minutes, hot water was added to readjust the liquid volume. Then, an appropriate amount of phosphoric acid was added for pH adjustment, and the mixture was stirred. The mixture was further stirred in a whirlpool (whirling separation tank) to remove the trub. Thereafter, the obtained liquid was cooled by a heat exchanger. After cooling, the liquid was diluted with degassed water, and then filtered using diatomaceous earth for clarification. Into the liquid, carbon dioxide gas was dissolved in an amount corresponding to a gas pressure of 0.23 MPa (20°C), thereby obtaining the beverage 1. The apparent extract of the beverage 1 was measured and found to be 1.1%.
The beverage 2 was a liquid obtained by diluting the beverage 1 with degassed water so that the apparent extract was 0.35%.

<Control Example 3>

The beverage 1 was mixed with a fragrance containing ATHP (San-Ei Gen F.F.I., Inc.) so that ATHP was contained in a predetermined concentration, and the temperature was adjusted to 4°C, thereby preparing a sample for drinking.
The prepared sample was subjected to sensory evaluation by six trained panelists. The evaluation items were fermented soybean smell, scorched smell, fermentation feeling, and beer-like robust feeling.
The sensory evaluation was performed by a method in which six trained beer expert panelists drank samples and scored the strength of each evaluation item in five stages. As for the score, the sample 36 was scored as 3, those that gave a slightly strong feeling were scored as 4, those that gave a strong feeling were scored as 5, those that gave a slightly weak feeling were scored as 2, and those that gave a weak feeling were scored as 1. Finally, the average of the scores of six people was calculated, which was used as the score.

[Table 10]

| | | Sample 44 | Sample 45 | Sample 46 | Sample 47 | Sample 48 |
|---|---|---|---|---|---|---|
| Beverage composition | ATHP concentration (ppb) | 0.5 | 1 | 10 | 30 | 40 |
| | Propyl acetate concentration (ppm) | 0 | 0 | 0 | 0 | 0 |
| Sensory evaluation | Green soybean smell | 3.00 | 4.50 | 4.83 | 5.00 | 5.00 |
| | Scorched smell | 3.00 | 4.50 | 4.83 | 5.00 | 4.83 |
| | Fermentation feeling | 3.00 | 3.00 | 3.00 | 2.83 | 2.83 |
| | Beer-like robust feeling | 3.00 | 3.00 | 3.00 | 3.50 | 3.50 |
| | Comments | Unsatisfied, watery | Cereal, watery | Cereal, light, green soybean smell | Green soybean smell, scorched smell, cereal | Green soybean smell, scorched smell, strong cereal, bad balance |

<Example 7>

The beverage 1 was mixed with a fragrance containing ATHP (San-Ei Gen F.F.I.,Inc.) and propyl acetate so that ATHP and propyl acetate were contained in a predetermined concentration, and the temperature was adjusted to 4°C, thereby preparing a sample for drinking. The prepared sample was subjected to sensory evaluation in the same manner as in Control Example 3.

"Comprehensive evaluation" was rated "A (excellent)" when there was no negative comment, the average value of "green soybean smell" and "scorched smell" was lower than that of the control by "0.5" points or more, and the average value of "fermentation feeling" and "beer-like robust feeling" was higher than that of the control by "0.5" points or more. "Comprehensive evaluation" was rated "B (inferior)" when the average value of "green soybean smell" and "scorched smell" was lower than that of the control by "0.5" points or more, the average value of "fermentation feeling" and "beer-like robust feeling" was higher than that of the control by "0.5" points or more, and there was a negative comment.

[Table 11]

| | | Sample 49 | Sample 50 | Sample 51 | Sample 52 | Sample 53 |
|---|---|---|---|---|---|---|
| Beverage composition | ATHP concentration (ppb) | 0.5 | 1 | 10 | 30 | 40 |
| | Propyl acetate concentration (ppm) | 0.2 | 0.2 | 0.2 | 0.2 | 0.2 |

(continued)

|  |  | Sample 49 | Sample 50 | Sample 51 | Sample 52 | Sample 53 |
|---|---|---|---|---|---|---|
| Sensory evaluation | Green soybean smell | 2.83 | 4.00 | 4.17 | 4.50 | 4.67 |
|  | Scorched smell | 2.83 | 3.83 | 4.17 | 4.50 | 4.67 |
|  | Fermentation feeling | 3.00 | 3.50 | 3.50 | 3.33 | 3.50 |
|  | Beer-like robust feeling | 3.00 | 3.50 | 3.67 | 4.00 | 4.00 |
|  | Comprehensive evaluation | - | A | A | A | B |
|  | Control of comprehensive evaluation | Sample 44 | Sample 45 | Sample 46 | Sample 47 | Sample 48 |
|  | Comments | Light | Cereal, light, mild | Cereal, light, mild | Green soybean, cereal, light | Green soybean smell, scorched smell, strong cereal, bad balance |

<Example 8>

A sample for drinking was prepared in the same manner as in Example 7 except that propyl acetate was mixed with the beverage 1 so that the propyl acetate concentration was 1 ppm, and subjected to sensory evaluation.

[Table 12]

|  |  | Sample 54 | Sample 55 | Sample 56 | Sample 57 | Sample 58 |
|---|---|---|---|---|---|---|
| Beverage composition | ATHP concentration (ppb) | 0.5 | 1 | 10 | 30 | 40 |
|  | Propyl acetate concentration (ppm) | 1 | 1 | 1 | 1 | 1 |
| Sensory evaluation | Green soybean smell | 2.83 | 4.00 | 4.17 | 4.50 | 4.67 |
|  | Scorched smell | 2.83 | 3.83 | 4.17 | 4.50 | 4.67 |
|  | Fermentation feeling | 3.00 | 3.50 | 3.50 | 3.50 | 3.50 |
|  | Beer-like robust feeling | 3.00 | 3.50 | 3.67 | 4.33 | 4.17 |
|  | Comprehensive evaluation | - | A | A | A | B |
|  | Control of comprehensive evaluation | Sample 44 | Sample 45 | Sample 46 | Sample 47 | Sample 48 |
|  | Comments | Light | Cereal, light | Cereal, light | Green soybean, cereal, light | Green soybean smell, scorched smell, strong cereal, bad balance |

<Example 9>

A sample for drinking was prepared in the same manner as in Example 7 except that propyl acetate was mixed with the beverage 1 so that the propyl acetate concentration was 10 ppm, and subjected to sensory evaluation.

[Table 13]

| | | Sample 59 | Sample 60 | Sample 61 | Sample 62 | Sample 63 |
|---|---|---|---|---|---|---|
| Beverage composition | ATHP concentration (ppb) | 0.5 | 1 | 10 | 30 | 40 |
| | Propyl acetate concentration (ppm) | 10 | 10 | 10 | 10 | 10 |
| Sensory evaluation | Green soybean smell | 2.67 | 3.33 | 3.33 | 3.67 | 4.50 |
| | Scorched smell | 2.67 | 3.83 | 3.83 | 4.33 | 4.67 |
| | Fermentation feeling | 3.33 | 3.67 | 3.50 | 3.67 | 3.67 |
| | Beer-like robust feeling | 3.33 | 3.50 | 3.50 | 4.50 | 4.50 |
| | Comprehensive evaluation | - | A | A | A | B |
| | Control of comprehensive evaluation | Sample 44 | Sample 45 | Sample 46 | Sample 47 | Sample 48 |
| | Comments | Light, fruity | Cereal, light, fruity | Cereal, mild, light, fermentation feeling, beer-like robust feeling | Green soybean, cereal, light, fermentation feeling, beer-like robust feeling | Green soybean smell, scorched smell, strong cereal, bad balance |

<Example 10>

A sample for drinking was prepared in the same manner as in Example 7 except that propyl acetate was mixed with the beverage 1 so that the propyl acetate concentration was 30 ppm, and subjected to sensory evaluation.

[Table 14]

| | | Sample 64 | Sample 65 | Sample 66 | Sample 67 | Sample 68 |
|---|---|---|---|---|---|---|
| Beverage composition | ATHP concentration (ppb) | 0.5 | 1 | 10 | 30 | 40 |
| | Propyl acetate concentration (ppm) | 30 | 30 | 30 | 30 | 30 |

(continued)

| | | Sample 64 | Sample 65 | Sample 66 | Sample 67 | Sample 68 |
|---|---|---|---|---|---|---|
| Sensory evaluation | Green soybean smell | 2.50 | 3.00 | 3.33 | 3.50 | 4.50 |
| | Scorched smell | 2.67 | 3.17 | 3.50 | 3.50 | 4.67 |
| | Fermentation feeling | 3.33 | 3.83 | 4.33 | 4.50 | 4.17 |
| | Beer-like robust feeling | 3.33 | 3.83 | 4.33 | 4.67 | 4.83 |
| | Comprehensive evaluation | - | A | A | A | B |
| | Control of comprehensive evaluation | Sample 44 | Sample 45 | Sample 46 | Sample 47 | Sample 48 |
| | Comments | Light, fruity | Cereal, flat, fruity, fermentation feeling | Cereal, mild, light, fermentation feeling, beer-like robust feeling | Fruity, light, mild fermentation feeling, beer-like robust feeling | Fruity, strong cereal, bad balance |

<Example 11>

A sample for drinking was prepared in the same manner as in Example 7 except that propyl acetate was mixed with the beverage 1 so that the propyl acetate concentration was 50 ppm, and subjected to sensory evaluation.

[Table 15]

| | | Sample 69 | Sample 70 | Sample 71 | Sample 72 | Sample 73 |
|---|---|---|---|---|---|---|
| Beverage composition | ATHP concentration (ppb) | 0.5 | 1 | 10 | 30 | 40 |
| | Propyl acetate concentration (ppm) | 50 | 50 | 50 | 50 | 50 |

(continued)

|  |  | Sample 69 | Sample 70 | Sample 71 | Sample 72 | Sample 73 |
|---|---|---|---|---|---|---|
| Sensory evaluation | Green soybean smell | 2.33 | 2.83 | 3.00 | 3.17 | 4.33 |
|  | Scorched smell | 2.33 | 3.33 | 3.67 | 3.67 | 4.33 |
|  | Fermentation feeling | 3.67 | 4.00 | 4.33 | 4.33 | 4.33 |
|  | Beer-like robust feeling | 3.67 | 3.67 | 4.50 | 4.83 | 4.83 |
|  | Comprehensive evaluation | - | A | A | A | B |
|  | Control of comprehensive evaluation | Sample 44 | Sample 45 | Sample 46 | Sample 47 | Sample 48 |
|  | Comments | Light, fruity | Cereal, flat, fruity, fermentation feeling | Cereal, light, fermentation feeling, beer-like robust feeling | Light, fermentation feeling, beer-like robust feeling | Green soybean smell, scorched smell, strong cereal, bad balance |

<Comparative Example 2>

A sample for drinking was prepared in the same manner as in Example 7 except that propyl acetate was mixed with the beverage 1 so that the propyl acetate concentration was 70 ppm, and subjected to sensory evaluation.

[Table 16]

|  |  | Sample 74 | Sample 75 | Sample 76 | Sample 77 | Sample 78 |
|---|---|---|---|---|---|---|
| Beverage composition | ATHP concentration (ppb) | 0.5 | 1 | 10 | 30 | 40 |
|  | Propyl acetate concentration (ppm) | 70 | 70 | 70 | 70 | 70 |
| Sensory evaluation | Green soybean smell | 2.17 | 2.67 | 2.83 | 3.50 | 4.00 |
|  | Scorched smell | 2.17 | 3.17 | 3.83 | 4.50 | 4.00 |
|  | Fermentation feeling | 3.83 | 4.17 | 4.50 | 4.00 | 3.83 |
|  | Beer-like robust feeling | 3.83 | 4.17 | 4.50 | 5.00 | 5.00 |
|  | Comprehensive evaluation | - | B | B | B | B |
|  | Control of comprehensive evaluation | Sample 44 | Sample 45 | Sample 46 | Sample 47 | Sample 48 |
|  | Comments | Too fruity, bad balance | Too fruity, bad balance | Too fruity, bad balance | Fruity, cereal, light, poor balance | Bad balance, not beer-like |

<Control Example 4>

The beverage 2 was mixed with a fragrance containing ATHP (San-Ei Gen F.F.I.,Inc.) so that ATHP was contained in a predetermined concentration, carbon dioxide gas was dissolved in an amount corresponding to a gas pressure of 0.23 MPa (20°C), and the temperature was adjusted to 4°C, thereby preparing a sample for drinking.

The prepared sample was subjected to sensory evaluation by six trained panelists. The evaluation items were fermented soybean smell, scorched smell, fermentation feeling, and beer-like robust feeling.

The sensory evaluation was performed by a method in which six trained beer expert panelists drank samples and scored the strength of each evaluation item in five stages. As for the score, the drink sample 1 having the least content of aroma components was scored as 3, those that gave a slightly strong feeling were scored as 4, those that gave a strong feeling were scored as 5, those that gave a slightly weak feeling were scored as 2, and those that gave a weak feeling were scored as 1. Finally, the average of the scores of six people was calculated, which was used as the score.

[Table 17]

| | | Sample 79 | Sample 80 | Sample 81 |
|---|---|---|---|---|
| Beverage composition | ATHP concentration (ppb) | 1 | 10 | 30 |
| | Propyl acetate concentration (ppm) | 0 | 0 | 0 |
| Sensory evaluation | Green soybean smell | 4.50 | 4.83 | 5.00 |
| | Scorched smell | 4.50 | 4.83 | 5.00 |
| | Fermentation feeling | 3.00 | 3.00 | 2.83 |
| | Beer-like robust feeling | 3.00 | 3.00 | 3.50 |
| | Comments | Cereal, watery | Cereal, light, green soybean smell | Green soybean smell, scorched smell, cereal |

<Example 12>

The beverage 2 was mixed with a fragrance containing ATHP (San-Ei Gen F.F.I.,Inc.) and propyl acetate so that ATHP and propyl acetate were contained in a predetermined concentration, carbon dioxide gas was dissolved in an amount corresponding to a gas pressure of 0.23 MPa (20°C), and the temperature was adjusted to 4°C, thereby preparing a sample for drinking. The prepared sample was subjected to sensory evaluation in the same manner as in Control Example 1.

"Comprehensive evaluation" was rated "A (excellent)" when there was no negative comment, the average value of "green soybean smell" and "scorched smell" was lower than that of the control by "0.5" points or more, and the average value of "fermentation feeling" and "beer-like robust feeling" was higher than that of the control by "0.5" points or more. "Comprehensive evaluation" was rated "B (inferior)" when the average value of "green soybean smell" and "scorched smell" was lower than that of the control by "0.5" points or more, the average value of "fermentation feeling" and "beer-like robust feeling" was higher than that of the control by "0.5" points or more, and there was a negative comment.

[Table 18]

| | | Sample 82 | Sample 83 | Sample 84 | Sample 85 | Sample 86 |
|---|---|---|---|---|---|---|
| Beverage composition | ATHP concentration (ppb) | 1 | 1 | 10 | 30 | 30 |
| | Propyl acetate concentration (ppm) | 0.2 | 50 | 30 | 0.2 | 50 |

(continued)

| | | Sample 82 | Sample 83 | Sample 84 | Sample 85 | Sample 86 |
|---|---|---|---|---|---|---|
| Sensory evaluation | Green soybean smell | 4.00 | 2.83 | 3.33 | 4.50 | 3.17 |
| | Scorched smell | 3.83 | 3.33 | 3.50 | 4.50 | 3.67 |
| | Fermentation feeling | 3.50 | 4.00 | 4.33 | 3.33 | 4.33 |
| | Beer-like robust feeling | 3.50 | 3.67 | 4.33 | 4.00 | 4.83 |
| | Comprehensive evaluation | A | A | A | A | A |
| | Control of comprehensive evaluation | Sample 45 | Sample 45 | Sample 46 | Sample 47 | Sample 47 |
| | Comments | Cereal, light, mild | Cereal, flat, fruity, fermentation feeling | Cereal, mild, light, fermentation feeling, beer-like robust feeling | Green soybean, cereal, light | Light, fermentation feeling, beer-like robust feeling |

## Claims

1. A low-alcohol beer-taste beverage having an alcohol concentration of less than 1 v/v%, comprising: a 2-acetyltetrahydropyridine compound concentration of more than 1 ppb and 30 ppb or less, the 2-acetyltetrahydropyridine compound being at least one selected from the group consisting of 2-acetyl-3,4,5,6-tetrahydropyridine and 2-acetyl-1,4,5,6-tetrahydropyridine that is a tautomer of 2-acetyl-3,4,5,6-tetrahydropyridine; and a propyl acetate concentration of 0.2 to 50 ppm.

2. The low-alcohol beer beer-taste beverage according to claim 1, wherein the alcohol concentration is less than 0.04 v/v%.

3. The beer-taste beverage according to claim 1 or 2, having a malt ratio of 80 w/w% or less.

4. The low-alcohol beer-taste beverage according to any one of claims 1 to 3, including a dealcoholized wort fermentation liquid.

5. The low-alcohol beer-taste beverage according to any one of claims 1 to 4, having an apparent extract concentration of 0.3 to 10%.

6. The low-alcohol beer-taste beverage according to any one of claims 1 to 4, having an apparent extract concentration of 1 to 10%.

7. The low-alcohol beer-taste beverage according to claim 1 or 2, having an apparent extract concentration of 0.3 to 5%.

8. A production method for a low-alcohol beer-taste beverage having an alcohol concentration of less than 1 v/v%, the production method comprising:

   providing a low-alcohol beer-taste beverage intermediate liquid having an alcohol concentration of less than 1 v/v%; and
   including: an ATHP in a concentration of more than 1 ppb and 30 ppb or less; and propyl acetate in a concentration of 0.2 to 50 ppm into the low-alcohol beer-taste beverage intermediate liquid.

9. The low-alcohol beer-taste beverage according to claim 1, 2, 5, or 7, being a non-fermented low-alcohol beer-taste

beverage.

## INTERNATIONAL SEARCH REPORT

| | International application No. |
|---|---|
| | **PCT/JP2024/026239** |

| A. | CLASSIFICATION OF SUBJECT MATTER |
|---|---|

*A23L 2/56*(2006.01)i; *A23L 2/00*(2006.01)i; *A23L 2/38*(2021.01)i; *C12C 12/04*(2006.01); *C12G 3/06*(2006.01)i
FI:    A23L2/56; A23L2/00 B; C12G3/06; C12C12/04; A23L2/38 J; A23L2/38 S

According to International Patent Classification (IPC) or to both national classification and IPC

| B. | FIELDS SEARCHED |
|---|---|

Minimum documentation searched (classification system followed by classification symbols)

A23L; C12C; C12G

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | MULLER, Carlos et al. Processes for alcohol-free beer production: a review. Food Science and Technology. 2020, 40(2), 273-281, DIO: 10.1590/fst.32318 <br> abstract, paragraphs 1.7-1.25, table 2 | 1-9 |
| Y | JP 2022-528453 A (HEINEKEN SUPPLY CHAIN B.V.) 10 June 2022 (2022-06-10) <br> claims, examples | 1-9 |
| Y | JP 2013-201976 A (ASAHI BREWERIES LTD.) 07 October 2013 (2013-10-07) <br> claims, examples | 1-9 |
| Y | US 2019/0144802 A1 (FLAVOLOGIC GMBH) 16 May 2019 (2019-05-16) <br> paragraphs [0084]-[0085], claims, particularly, claim 55 | 1-9 |
| Y | US 2010/0047422 A1 (MAGALHAES MENDES, Adelio Miguel) 25 February 2010 (2010-02-25) <br> claims, paragraph [0001], examples | 1-9 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 September 2024** | **01 October 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
|---|
| **PCT/JP2024/026239** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-27828 A (ASAHI BREWERIES LTD.) 25 February 2021 (2021-02-25) claims, examples | 1-9 |
| Y | WO 2022/050067 A1 (ASAHI GROUP HOLDINGS LTD.) 10 March 2022 (2022-03-10) claims, examples | 1-9 |
| Y | JP 2015-27309 A (SOMEYA, Taichi) 12 February 2015 (2015-02-12) claims 1, 3, paragraph [0015], examples 1, 8-12 | 1-9 |
| Y | 印藤　元一 (INDO, Motoichi). 合成香料　化学と商品知識, 06 March 1996, pp. 592-593, ISBN: 4-87326-206-2, non-official translation (Synthetic Fragrances. Chemistry and Product Knowledge) column "Propyl acetate" | 1-9 |

Form PCT/ISA/210 (second sheet) (July 2022)

## INTERNATIONAL SEARCH REPORT
### Information on patent family members

| International application No. |
| --- |
| **PCT/JP2024/026239** |

| Patent document cited in search report | | | Publication date (day/month/year) | Patent family member(s) | | | Publication date (day/month/year) |
| --- | --- | --- | --- | --- | --- | --- | --- |
| JP | 2022-528453 | A | 10 June 2022 | US | 2022/0169959 | A1 | |
| | | | | examples, claims | | | |
| | | | | WO | 2020/204722 | A1 | |
| | | | | EP | 3947625 | A1 | |
| | | | | CN | 113811594 | A | |
| | | | | AU | 2020253196 | A1 | |
| | | | | CA | 3135701 | A1 | |
| | | | | MX | 2021011998 | A | |
| | | | | BR | 112021019758 | A | |
| JP | 2013-201976 | A | 07 October 2013 | (Family: none) | | | |
| US | 2019/0144802 | A1 | 16 May 2019 | JP | 2018-531601 | A | |
| | | | | JP | 2018-534049 | A | |
| | | | | US | 2018/0317527 | A1 | |
| | | | | WO | 2017/077084 | A1 | |
| | | | | WO | 2017/077075 | A1 | |
| | | | | WO | 2017/077086 | A1 | |
| | | | | EP | 3370539 | A1 | |
| | | | | EP | 3370540 | A1 | |
| | | | | DE | 102015119154 | A1 | |
| | | | | DE | 102015119155 | A1 | |
| | | | | DE | 102016105992 | A1 | |
| | | | | DE | 102016105993 | A1 | |
| | | | | DE | 102016105997 | A1 | |
| | | | | AU | 2016348735 | A1 | |
| | | | | AU | 2016348733 | A1 | |
| | | | | CN | 108601366 | A | |
| | | | | BR | 112018007297 | A | |
| | | | | CN | 109475143 | A | |
| US | 2010/0047422 | A1 | 25 February 2010 | JP | 2010-517559 | A | |
| | | | | WO | 2008/099325 | A2 | |
| | | | | EP | 2109372 | A1 | |
| | | | | PT | 103657 | A | |
| JP | 2021-27828 | A | 25 February 2021 | JP | 6811352 | B1 | |
| WO | 2022/050067 | A1 | 10 March 2022 | AU | 2021337053 | A | |
| | | | | examples, claims | | | |
| | | | | JP | 2022-43839 | A | |
| JP | 2015-27309 | A | 12 February 2015 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021027828 A

- WO 2022050067 A1

**Non-patent literature cited in the description**

- Methods of Analysis of BCOJ. Brewers Association of Japan, 2004, vol. 7

- Methods of Analysis of BCOJ. Brewers Association of Japan, 2004